# EUROPÄISCHE PATENTSCHRIFT

(11) **EP 0 507 841 B1**
(45) Veröffentlichungstag und Bekanntmachung des Hinweises auf die Patenterteilung: **20.04.1994**
(21) Anmeldenummer: 91902201.2
(22) Anmeldetag: 02.01.1991
(51) Int. Cl.: F03D 7/02, F03D 1/02, F03D 11/04, F03D 11/00

(54) **ROTORLAGERUNGSANORDNUNG FÜR EINE WINDKRAFTMASCHINE**
BEARING ARRANGEMENT FOR THE ROTOR OF A WIND POWER ENGINE
SUPPORT DU ROTOR D'EOLIENNES

(30) Priorität: 03.01.1990 DE 4000092
(43) Veröffentlichungstag der Anmeldung: 14.10.1992
(73) Patentinhaber: KLING, Mauricio, D-80333 München (DE)
(72) Erfinder: KLING, Mauricio, D-80333 München (DE); KLING, Alberto, Bogota (CO)
(74) Vertreter: Grünecker, Kinkeldey, Stockmair & Schwanhäusser Anwaltssozietät
(86) Internationale Anmeldenummer: EP9100002
(87) Internationale Veröffentlichungsnummer: WO9110066

(56) Entgegenhaltungen:
- DE-A- 2 506 160
- DE-C- 167 960
- DE-C- 535 625
- GB-A- 571 644

## Beschreibung

Die vorliegende Erfindung betrifft eine Rotorlagerungsanordnung für eine Windkraftmaschine mit einer Rotoranordnung, mit zumindest einem Paar gegenläufiger Rotoren an einem mehrachsig bewegbaren Lagerungskörper, der eine Positionierungsvorrichtung aufweist und an zumindest einer stationären Stützeinrichtung gelagert ist, wobei die Rotoranordnung einerseits einer horizontalen Schwenkachse, dem Wind zugewandt, angeordnet ist.

Rotorlagerungsanordnungen für Windkraftmaschinen, die zur Kompensation des Rotordralls mit gegenläufig arbeitenden Rotoren versehen sind und die drehbar an einem Lagerungskörper gelagert sind, sind in verschiedenen Ausführungsformen bekannt.

So ist z.B. aus der DE-PS 2 506 160 ein mit einem Rotorpaar gegenläufigen Dralls versehenes Windkraftwerk bekannt, dessen Rotoranordnung innerhalb des Lagerungskörpers um eine Rotordrehachse drehbar ist, gemeinsam mit dem Lagerungskörper jedoch auch um eine, im wesentlichen rechtwinklig zu der Rotordrehachse verlaufende Horizontalachse zur Einstellung der Rotoranordnung in den Wind schwenkbar ist und überdies zur Windorientierung um eine Vertikalachse schwenkbar an der Tragkonstruktion des Windkraftwerkes gelagert ist. Aufgrund der Größe derartiger Rotoren bilden die windkraftabhängigen Belastungen (Staudruck), die über die Rotoranordnung auf die Lagerungs- und Stützkonstruktionen derselben einwirken sowie eine optimale Anstellung der Rotoranordnung zum Wind für einen hohen Wirkungsgrad der Anlage ein Hauptproblem bei der konstruktiven Auslegung und betriebsmäßigen Beherrschung derartiger Windkraftanlagen. Zur Vermeidung sehr hoher Lastaufnahmen, wird in der DE-PS 2 506 160 vorgeschlagen, der der Rotoranordnung einen weiteren Freiheitsgrad in einer eine Präzession der Rotoranordnung ermöglichenden Weise zu gestatten , um hierdurch unter Ausnutzung von Präzisionskräften die Rotorpositionierung zu erleichtern und die Beanspruchung der Lagerungs- und Tragkonstruktion für die Aktivteile der Windkraftmaschine herabzusetzen. Dies führt jedoch zu einer verhältnismäßig komplizierten Lagerungsgestaltung, die zudem nicht für solche Rotoranordnungen geeignet ist, die einseitig vorspringend an der dem Wind zugewandten Seite eines Lagerungskörpers drehbar gelagert sind.

Bei Windkraftmaschinen, die eine Rotoranordnung aufweisen, die über einen seinerseits um eine Horizontalachse schwenkbaren und um eine Vertikalachse drehbaren Lagerungskörper an hohen Stützmasten gelagert sind, ist in Abhängigkeit vom Staudruck des Windes die Biegebeanspruchung des vertikalen Stützmastes ebenso wie die Lagerbeanspruchungen im Bereich des Lagerungskörpers beträchtlich. Dieses Problem gewinnt noch an Schärfe, wenn die paarweise gegenläufig vorgesehenen Rotorblätter der Rotoranordnung nicht koaxial sondern achsparallel nebeneinander oder in einer Doppelanordnung mit vier Rotorblättern einseitig an dem Lagerungskörper angeordnet sind.

Der Erfindung liegt daher die Aufgabe zugrunde, eine Rotoranordnung für eine Windkraftmaschine der eingangs genannten Art so zu verbessern, daß in Abhängigkeit vom Windstaudruck auftretende Belastungen einer vertikalen Stützkonstruktion der Windkraftmaschine, insbesondere hohe Biegebelastungen, die besonderen Einfluß auf die Auslegung der Fundamente der Stützkonstruktion haben, vermieden werden und geringere Anforderungen an die Bodenverankerung der vertikalen Stützkonstruktion gestellt werden können.

In einer bevorzugten Ausgestaltung der Rotorlagerungsanordnung der eingangs genannten Art soll es außerdem auf einfache Weise möglich sein, die Drehzahl der Rotoranordnung und ihre Anstellung in die Windströmung zu beeinflussen.

Schließlich soll die Rotorlagerungsanordnung der eingangs genannten Art auch so verbessert werden, daß insgesamt eine verhältnismäßig massearme Stützkonstruktion verwendet werden kann.

Diese Aufgaben sind durch DE-A-535 625 teilweise gelöst worden. Bezüglich Aerodynamik und Stabilität ist die bekannte Lösung aber offensichtlich verbesserungsbedürftig.

Die vorgenannte Aufgabe wird erfindungsgemäß dadurch gelöst, daß der Lagerungskörper oberhalb seines Schwerpunktes an der Stützeinrichtung um die horizontale Schwenkachse schwenkbar gelagert ist, die horizontale Schwenkachse sich oberhalb einer Horizontal-Mittelachse der Rotoranordnung erstreckt und der Lagerungskörper andererseits der horizontalen Schwenkachse einen verlängerten Endabschnitt bzw. Tragabschnitt mit zumindest einem aerodynamischen Steuerflügel aufweist, der schwenkbar an dem Endabschnitt gelagert und zur Erzeugung einer Abwärtskraft gestaltet ist.

Durch eine derartige Rotorlagerungsanordnung wird in vorteilhafter Weise eine stabile Gleichgewichtslagerung der gesamten Rotor-Kopfeinrichtung der Windkraftmaschine in einer aurch die an der Stützeinrichtung gebildeten horizontalen Schwenkachse bestimmten schwenkbaren Pendellagerung erreicht. Durch entsprechende Bemessung des als zweiarmiger Hebel ausgebildeten Lagerungskörpers, dessen Drehachse mit der horizontalen Schwenkachse in der vertikalen Stützebene der Rotorlagerungsanordnung der Windkraftmaschine zusammenfällt, kann zunächst die vertikale Stützkonstruktion von solchen Momenten im wesentlichen freigehalten werden, die aus der Gewichtskraft der Rotoranordnung resultieren.

Bezüglich eines Biegemomentes, das im wesentlichen auf den an den Rotorblättern der Rotoranordnung angreifenden Windstaudruck resultiert und aufgrund der Hängelagerung des Lagerungskörpers zu einem Drehmoment um die horizontale Schwenkachse führt, sorgt der windabströmseitig vorgesehene aerodynamische Steuerflügel, der in unterschiedlichem Anstellwinkel schwenkbar an dem verlängerten Endabschnitt des Lagerungskörpers gelagert ist, dafür, daß in Abhängigkeit von der Profilgeometrie und der Luftströmung eine "umgekehrte" Auftriebskraft, d.h. eine Abwärtskraft an dem verlängerten Endabschnitt bzw. Steuerflügel-Tragabschnitt des lagerungskörpers angreift, die zu einem Gegendrehmoment entgegen dem in Abhängigkeit vom Staudruck auf der Rotorseite erzeugten Drehmoment führt, so daß ein resultierendes, auf die vertikale Stützkonstruktion der Rotorlagerungsanordnung der Windkraftmaschine einwirkendes und insbesondere die Funaamente der Stützkonstruktion belastendes Biegemoment in Richtung eines Ausgleiches kompensiert, zumindest aber deutlich verringert ist.

Uberdies bietet die erfinoungsgemäße Lösung den Vorteil, daß durch Zwangssteuerung des Einstellwinkels des aerodynamischen Steuerflügels in Abhängigkeit von der Windstärke oder bei gefährlichen Windverhältnissen ein Aus-dem-Wind-Verschwenken der Rotoranordnung erfolgen kann, um die Drehzahl der Rotoren zu regeln, insbesondere dann, wenn Generatoren verwendet werden, die für einen Konstantdrehzahlbetrieb ausgelegt sind.

Durch Steuerung des Einstellwinkels des Steuerflügels kann somit auch die Drehzahl der Rotoren begrenzt werden.

Gemäß einer bevorzugten Ausgestaltung des Erfindungsgegenstandes weist der Lagerungskörper einen Rotor-Tragabschnitt einerseits der horizontalen Schwenkachse und einen Steuerflügel-Tragabschnitt andererseits der Schwenkachse auf, wobei der Abstand zwischen der Lagerung der Rotoranordnung und der Schwenkachse vorzugsweise im Verhältnis 1:2 kleiner ist als ein Abstand zwischen der Lagerung des Steuerflügels und der Schwenkachse. Durch entsprechende Dimensionierung der Hebelverhältnisse unter Beachtung der durch die Gewichtskräfte zu beiden Seiten der Schwenkachse veranlaßten Drehmomente kann die Vertikallagerung der aktiven Teile der Windkraftmaschine im wesentlichen in ihrem Schwerpunkt erfolgen, so daß die Stützkonstruktion von Biegemomenten im wesentlichen frei bleibt, die aus der Konstruktion und dem Gewicht der Rotorlagerungsanordnung resultieren.

Vorzugsweise weist der Steuerflügel ein aerodynamisches Tragflügelprofil auf, wobei die Verbindung des Steuerflügels an dem Endabschnitt des Lagerungskörpers "umgekehrt" erfolgt, so daß die Luftströmung entlang des Tragflügelprofiles eine negative Auftriebskraft, d.h. eine abwärts gerichtete Kraft an dem Steuerflügel erzeugt.

Nach einer weiteren, bevorzugten Ausführungsform der Erfindung weist die Unterseite des Tragflügelprofiles des Steuerflügels eine Krümmung auf, die größer ist als eine Krümmung an der Profiloberseite des Steuerflügels.

Aus Gründen einer möglichst gleichmäßigen Kraftverteilung an dem Lagerungskörper und zur Erhöhung der Wirkung auf den Lagerungskörper ist vorzugsweise ein Paar Steuerflügel am oberen Ende des Endabschnittes bzw. Steuerflügel-Tragabschnittes des Lagerungskörpers vorgesehen und dort schwenkbar gelagert.

Um die Rotoranordnung in den Wind zu steuern, können im Bereich der Schwenklagerung der Steuerflügel d.h. am abströmseitigen Ende des Endabschnittes noch weitere als Seitensteuer wirkende Strömungssteuerelemente, wie z.B. zumindest eine Steuerfahne oder eine Steuerklappe vorgesehen sein.

Um eine ausreichende Windbeeinflussung und Umströmung des in aer Art umgekehrter Tragflügel schwenkbar am oberen, hinteren Bereich des verlängerten Endabschnittes des Lagerungskörpers gelagerten Steuerflügel zu gewährleisten mit dem Ergebnis des Entstehens einer entsprechenden Abtriebskraft, wird bevorzugt, daß in Bezug auf eine gewichtsausgeglichene Horizontalstellung des Lagerungskörpers an der vertikalen Stützeinrichtung der verlängerte Endabschnitt des Lagerungskörpers einen sich geneigt aufwärts erstreckenden Steuerflügel-Tragabschnitt bildet, wobei eine Schwenklagerung des Steuerflügels oder der Steuerflügel an dem Endabschnitt etwa in einer gedachten axialen Verlängerung eines oberen Peripheriepunktes der Rotoranordnung erfolgt.

Auf diese Weise wird auch bei Hintereinanderanordnung von Rotor und Steuerflügel in Windströmungsrichtung eine hinreichende Luftströmung für die die Rotoranordnung in den Wind stellenden weiteren Seitensteuerorgane, wie z.B. eine Steuerfahne, die im allgemeinen in Verbindung mit einem abströmseitigen Ende des Lagerungskörpers vorgesehen sind, erreicht. Gleiches gilt für die Windbeaufschlagung des Steuerflügels selbst.

Für eine problemlose Einstellung der Rotoranordnung in den Wind kann der Lagerkörper auch durch eine Steuereinrichtung gesteuert um eine vertikale Stützachse und die horizontale Schwenkachse bei gleichzeitiger Rotationslagerung der Rotoren in dem Lagerungskörper verschwenkbar sein. Der Lagerungskörper erstreckt sich vorzugsweise in seinem kompakten Mittelbereich zentrisch zu der vertikalen Stützeinrichtung.

Zur Beeinflussung der Windausnutzung durch die Rotoranordnung der Windkraftmaschine, insbesondere in Verbindung mit einem Konstantdrehzahlbetrieb von zugehörigen Generatoren ist der zumindest eine aerodynamische Steuerflügel vorzugsweise durch die Steuereinrichtung in Verbindung mit einer Sensor-Lageerfassungseinrichtung in seinem Einstellwinkel kontrolliert steuerbar.

Zum Drallausgleich werden vorzugsweise entweder mindestens ein Paar koaxialer gegenläufiger Rotoren an dem Lagerungskörper angeordnet oder es werden zwei gegenläufige Rotoren nebeneinander an dem Lagerungskörper gelagert. Schließlich können vorzugsweise auch vier gegenläufige Rotoren über ein Stabwerk an dem Lagerungskörper angeordnet sein; jeder dieser Rotoren kann seinerseits aus zwei koaxialen Rotoren mit gegenläufigem Drall bestehen.

Zur Verbesserung oer Seiten- oder Kippstabilität und zur Entlastung des Lagers zur Drehung des Lagerungskörpers um die vertikale Hochachse ist vorzugsweise ein Vertikal-Hilfslager vorgesehen, mit einer Zylinderrollenanordnung, welche den Turm bzw. die vertikale Stützeinrichtung der Windkraftmaschine umgibt und sich vorzugsweise auf einem Führungsring an dem Stützturm unterhalb des Hauptlagers für die Drehung des Lagerungskörpers um die Vertikalachse abstützt. Vorzugsweise ist das Gehäuse des Hilfslagers über ein zweiarmiges Stabwerk mit dem Lagerungskörper verbunden.

Eine weitere Erhöhung der Kippsteifigkeit und Unterstützung der die horizontale Schwenkachse bildenden Lagerung kann ein weiteres Stützlager zwischen dem Lagerungskörper und dem Gehäuse des Vertikal-Hilfslagers, vorzugsweise bestehend aus einer Führungsschienen/Führungsrollen-Anordnung, ausgebildet sein. Vorzugsweise sind in Verbindung mit dem Rotor-Tragabschnitt und dem Steuerflügel-Tragabschnitt des Lagerungskörpers an dem Lagerungskörper zumindest zwei parallel beiderseits der vertikalen Stützeinrichtung angeordnete, kreisbogenförmige Führungsschienenabschnitte angeordnet, die sich auch entlang des Gehäuäses des Vertikal-Hilfslagers erstrecken und die bezüglich ihrer Krümmung auf die horizontale Schwenkachse des Lagerungskörpers zentriert sind. Ferner sind beiderseits des Gehäuses des Vertikal-Hilfslagers Führungsrollen zum Eingriff mit den Führungsabschnitten vorgesehen.

Zum Zwecke eines Schutzes der Rotorlagerungsanordnung vor Uberschwingen um die horizontale Schwenkachse sowie zur Ausführung von Steuerungsvorgängen bezüglich der Regelung des Windangriffes an den Rotoren durch Verschwenken des Lagerungskörpers mit der Rotoranordnung um die horizontale Schwenkachse ist vorzugsweise der Lagerungskörper beiderseits der horizontalen Schwenkachse mit einem ersten und einem zweiten Zugmittelgetriebe zur Begrenzung einer Schwenkbewegung des Lagerungskörpers um die horizontale Schwenkachse versehen.

Nach einer weiteren, vorteilhaften Ausgestaltung der Erfindung ist das erste Zugmittelgetriebe zwischen dem Gehäuse des Vertikal-Hilfslagers und einem rotorseitig von der Schwenkachse beabstandeten Anlenkpunkt des Rotor-Tragabschnittes des Lagerungsabschnittes vorgesehen und erstreckt sich das zweite Zugmittelgetriebe zwischen dem Gehäuse des Vertikal-Hilfslagers und einem steuerflügelseitig von der horizontalen Schwenkachse beabstandeten Anlenkpunkt des Steuerflügel-Tragabschnittes des Lagerungskörpers. Als Zugmittelgetriebe dienen vorzugsweise zugfeste Seile, vorzugsweise Kunststoffseile, die auf an dem Gehäuse des Vertikal-Hilfslagers vorgesehene, motorisch betätigbare Haspeln aufgenommen sind, die durch gehäusefeste Servomotoren angetrieben werden. Schließlich können vorzugsweise an dem Gehäuse des Vertikal-Hilfslagers Dämpfungsmittel zur dämpfenden Begrenzung der Schwenkbewegung des Lagerungskörpers oder mit diesem verbundener Stabwerke vorgesehen sein.

Die Erfindung wird nachstehend anhand von Ausführungsbeipielen und zugehörigen Zeichnungen näher erläutert. In diesen zeigen.
- Fig. 1: eine Rotorlagerungseinrichtung einer Windkraftmaschine nach einem ersten Ausführungsbeispiel der vorliegenden Erfindung,
- Fig. 2: eine Ansicht entsprechend derjenigen in Fig. 1, jedoch ohne Hilfslageranordnung,
- Fig. 3: einen Auslenkungs- oder Steuerzustand der Rotorlagerungsanordnung nach Fig. 2,
- Fig. 4: eine Teil-Vorderansicht einer Rotorlagerungsanordnung einer Windkraftmaschine nach einem weiteren Ausführungsbeispiel der vorliegenden Erfindung mit zwei symmetrisch angeordneten Rotorpaaren,
- Fig. 5: eine Draufsicht nach Fig. 4,
- Fig. 6: eine Rotorlagerungsanordnung ähnlich derjenigen in Fig. 1 nach einem weiteren Ausführungsbeispiel der vorliegenden Erfindung mit vier Rotoren,
- Fig. 7: eine Rückansicht nach Fig. 6,
- Fig. 8: eine Hilfslageranordnung in schematischer Darsteilung nach Fig. 1 in Vorderansicht,
- Fig. 9: eine Seitenansicht nach Fig. 8,
- Fig. 10: eine schematische Darstellung einer Schwenkbegrenzungsvorrichtung in Verbindung mit einer Rotorlagerungsanordnung nach Fig. 1,
- Fig. 11: eine Darstellung wie Fig. 10 in einem Verschwenkungszustand des Lagerungskörpers in eine Schwenkgrenzlage.

Die Erfindung wird nachstehend anhand von Ausführungsbeispielen und zugehörigen Zeichnungen näher erläutert. Diese zeigen jeweils schematisch den Grundaufbau verschiedener Ausführungsformen einer Rotorlagerungsanordnung für eine Windkraftmaschine sowie Einzelheiten derselben, wobei in sämtlichen Darstellungen die elektrischen Generatoreinrichtungen zur Umwandlung der Windenergie in elektrische Energie nicht mit dargestellt sind.

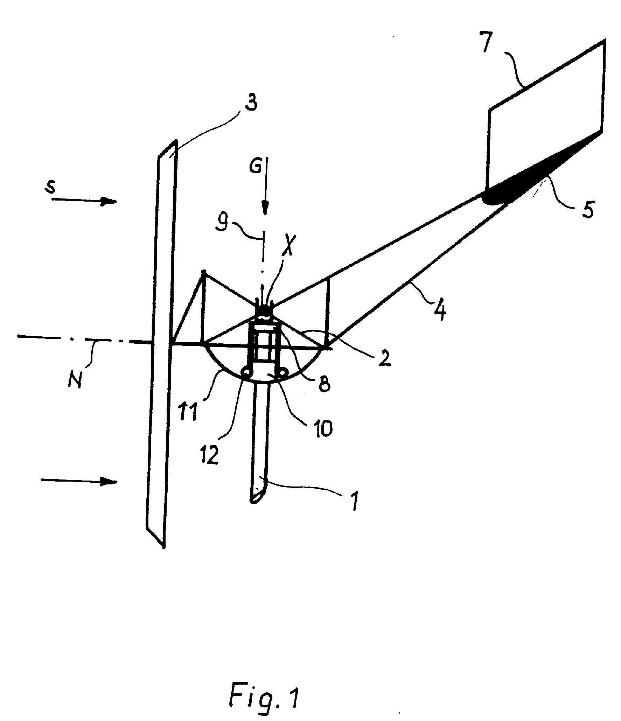

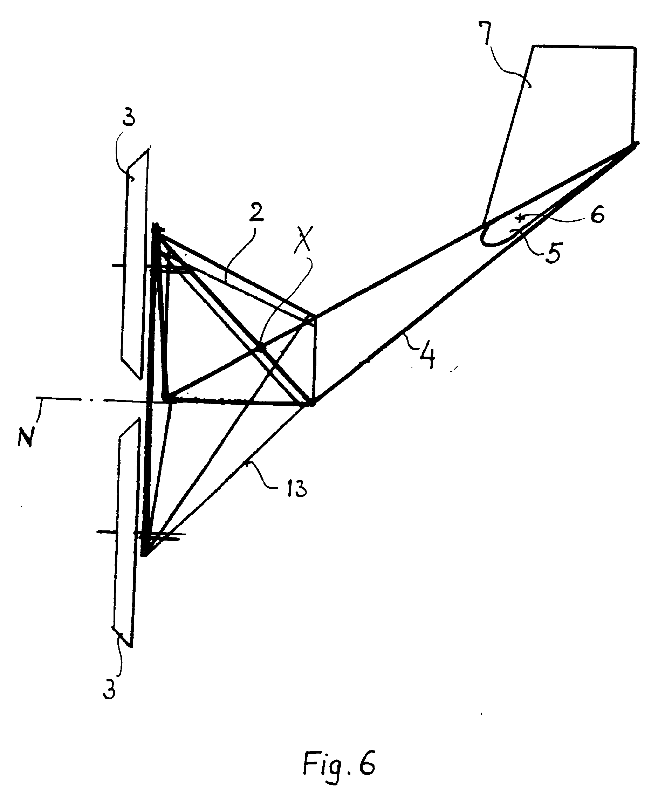

Fig. 1 zeigt eine Rotorlagerungsanordnung einer Windkraftmaschine in schematischer Darstellung, wobei die Windkraftmaschine eine vertikale Stützeinrichtung 1, nachfolgend stets als Turm bezeichnet, sowie einen an dem oberen Ende des Turmes 1 in mehreren Achsen drehbar bzw. verschwenkbar gelagerten Lagerungskörper 2 trägt. Der Lagerungskörper 2 ist als zweiarmiger, um eine horizontale Schwenkachse X schwenkbarer Hebel ausgebildet. Ein kurzer Hebelarm (Rotor-Tragabschnitt) des Lagerungskörpers 2 (in Fig. 1 links der Schwenkachse X) trägt an seinem Ende eine Rotoranordnung 3, die z.B. aus zwei koaxial mit gegenläufigem Drall versehenen Rotoren besteht. Die Rotoranordnung 3 kann aber z.B. auch achsparallele Doppel-Rotoranordnung ausgebildet sein, die zwei nebeneinander angeordnete Rotoren mit gegenläufigem Drall aufweist. Der Lagerungskörper 2 weist andererseits einen längeren Hebelarm auf (in Fig. 1 rechts der Schwenkachse X), der einen verlängerten Endabschnitt 4 (Steuerflügel-Tragabschnitt) des Hebelarmes bildet und zumindest einen aerodynamischen Steuerflügel 5 trägt. Dieser Steuerflügel 5 ist in der Achse o (Fig. 6) schwenkbar an dem Endabschnitt 4 gelagert, der überdies eine Steuerfahne 7 aufweist, um die gesamte Rotorlagerungsanordnung mit dem Steuerkörper 2 in der Windströmung zu halten, die in Fig. 1 durch Pfeile links der Rotoranordnung 3 angedeutet ist.

Der Lagerungskörper 2 ist zentral und gewichtsausgeglichen um die horizontale Schwenkachse X schwenkbar sowie zentrisch an dem Turm 1 gelagert und durch ein Hauptlager 8 um eine vertikale Hochachse 9 drehbar, so daß, unterstützt durch die Steuerfahne 7, die Rotorlagerungsanordnung jederzeit einer wechselnden Windrichtung auf die Rotoranordnung 3 folgen kann.

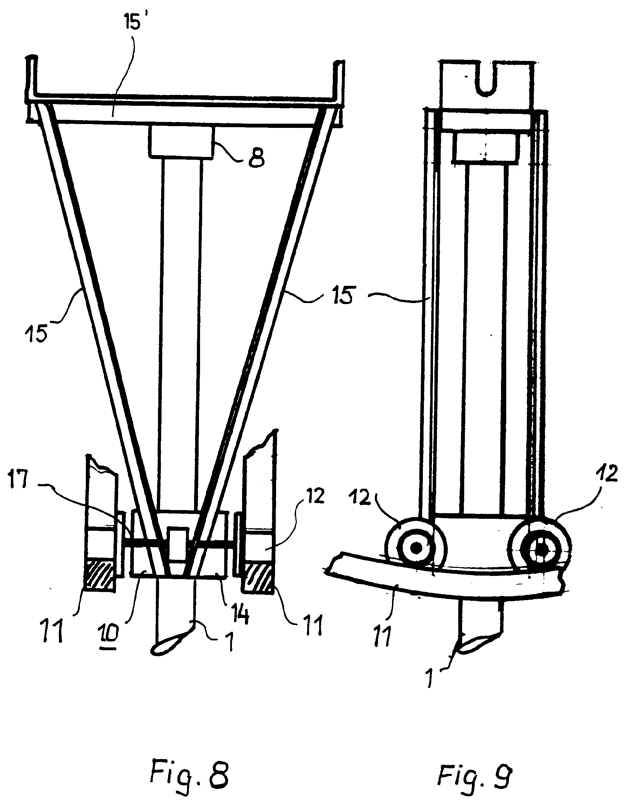

Zur Unterstützung der vertikalen Hauptlagerung 8 ist ferner ein Vertikal-Hilfslager 10 in Verbindung mit einer Zylinder-Rollenanordnung 12 und Führungsbahnen 11 vorgesehen, die ihrerseits eine Lagerabstützung für die Horizontallagerung um die Schwenkachse X bilden und nachfolgend noch im einzelnen unter Bezugnahme auf die Fig. 8 und 9 erläutert werden.

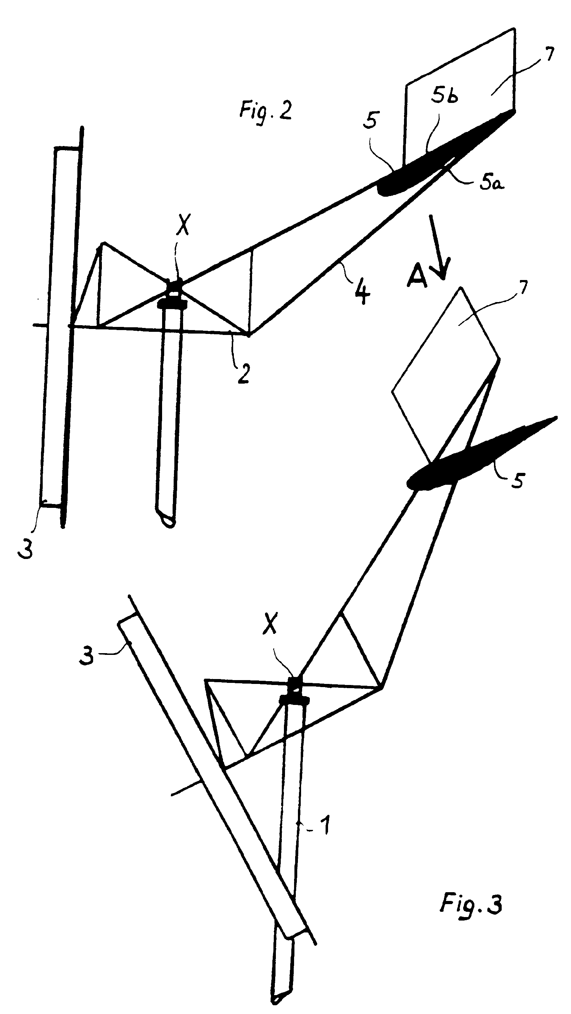

Die Wirkungsweise der Anordnung des an dem Endabschnitt oder Steuerflügel-Tragabschnitt 4 des Lagerungskörpers 2 schwenkbar gelagerten Steuerflügels 5 auf die Belastung des Turmes 1 durch Biegemomente infolge des Wincstaudruckes auf die Rotoranordnung 3 wird nachfolgend unter Bezugnahme auf die Fig. 2 und 3 erläutert.

In den Fig. 2 und 3 ist schematisch die Rotorlagerungsanordnung nach Fig. 1, jedoch ohne die Steuerfahne 7, gezeigt.

Der Steuerflügel 5 hat ein Tragflügelprofil und ist in "umgekehrter" Anordnung schwenkbar an dem Endabschnitt 4 gelagert. Aufgrund der Ausgestaltung des Steuerflügels 5 derart, daß eine Steuerflügelunterseite 5a eine größere Krümmung aufweist als eine Steuerflügeloberseite 5b, wird der an einem Tragflügelprofil in der Luftströmung entstehende Auftrieb, bedingt durch die umgekehrte Anordnung des Steuerflügels 5, zu einer Abtriebskraft, die bodenseitig nach unten weist und in Fig. 2 durch den Pfeil A dargestellt ist.

Wie bereits aus Fig. 1 ersichtlich, ist der Lagerungskörper hängend durch die horizontale Schwenkachse X an dem Turm 1 in einer stabilen Gleichgewichtslage gelagert, derart, daß die Horizontal-Mittelachse N der Rotoranordnung 3, gegenüber der der gegenläufige Rotordrall der Rotoranordnung ausgeglichen ist, sich in vertikaler Richtung unterhalb und mit einem Abstand zur horizontalen Schwenkachse X erstreckt. Um eine entsprechende Anströmung und Windbeaufschlagung des Steuerflügels 5 zu erreichen, erstreckt sich der Endabschnitt 4 des Lagerungskörpers 2 geneigt aufwärts, so daß die Schwenklagerung des Steuerflügels 5 etwa in einer Verlängerung des oberen peripheren Umfangsbereiches der Rotoranordnung 3 erfolgt und, insbesondere in Verbindung mit einer Steuerfahne 7 (Fig. 1), eine ausreichende Windbeaufschlagung des Enaabschnittes 4 im Bereich des Steuerflügels 5 erreicht wird. Der ankommende Wind führt einerseits an den Rotorblättern der Rotoranordnung 3 zu einem Staudruck und andererseits dazu, daß aufgrund der Profilierung des Steuerflügels 5 eine abwärts gerichtete Kraft auftritt (vgl. Pfeil A in Fig. 2), die um die horizontale Schwenkachse X ein Ddrehmoment erzeugt, so daß aufgrund der im wesentlichen gewichtsausgeglichenen Lagerung der Gesamtanordnung in der horizontalen Schwenkachse X, der Lagerungskörper 2 mit der Rotoranordnung 3 zu einer Drehung um die Schwenkachse X, d.h. bezüglich des Endabschnittes 4, eine Schwenkung nach unten und vorwärts neigt. Im Gegensatz dazu führt der horizontale Staudruck auf die Rotoranordnung 3 (vgl. Pfeile S in Fig.1, unter der Annahme eines im wesentlichen horizontalen Windeinfalles in den Fig. 1 und 2) zu einer Gegendrehung der Rotoranordnung mit dem Lagerungskörper 2 um die Schwenkachse X in Richtung einer Lage, wie sie z.B. in Fig. 3 dargestellt ist. Bezüglich der Rotoranordnung 3 bedeutet dies ein Schwenken um die X-Achse nach unten und rückwärts.

Entsprechend tritt, bedingt durch die Anordnung des Steuerflügels 5, zu dem staudruckabhängigen, die Rotoranordnung um die horizontale Schwenkachse X nach unten und rechts (Fig. 1) verschwenkenden Drehmoment, ein KompensationsGegendrehmoment um die Schwenkachse X auf (in Fig. 1 nach unten und links), so daß ein resultierendes Biegedrehmoment, das auf den Turm 1 einwirkt, und insbesondere die bodenseitigen Fundamente desselben belastet, verringert oder ausgleichbar ist.

Vorzugsweise ist der Lagerungskörper 2 in der Bemessung des Rotor-Tragabschnittes im Verhältnis zu dem Steuerflügel-Tragabschnitt unter Berücksichtigung der zugehörigen Masseverteilung so gestaltet, daß eine Momentenbelastung des Turmes 1 durch eine Gewichtskraft der Rotorlagerungsanordnung vermieden oder zumindest sehr gering ist.

Obwohl dies in den Fig. 1 bis 3 nicht gezeigt ist, können selbstverständlich im Bereich des Endabschnittes 4 des Lagerungskörpers 1 weitere Windeinstellelemente, wie z.B. Klappen zusätzlich oder anstelle einer Steuerfahne 7 (Fig. 1) vorgesehen sein.

Fig. 3 zeigt eine windstaudruckabhängige Verschwenkung des Lagerungskörpers 2 mit der Rotoranordnung 3 und dem Steuerflügel 5, wobei eine derartige Stellung durch hier nicht gezeigte Steuerungmittel auch willkürlich eingestellt werden kann, um bei extrem großer Windstärke gefährliche Schwingungen zu vermeiden und die Rotoranordnung 3 zum Teil aus dem Wind zu schwenken, oder, um einen Konstantgeschwindickeitsbetrieb der Rotoranordnung 3 einzustellen, z.B. dann, wenn in Verbindung mit der Rotoranordnung Generatoren verwendet werden, die im Konstantdrehzahlbetrieb arbeiten.

Zusätzlich zu hier nicht gezeigten Mitteln zur Schwenkbetätigung der gesamten Rotorlagerungsanordnung um die horizontale Schwenkachse X kann in Verbindung mit einer Steuerung der Rotordrehzahl ebenfalls eine Steuereinrichtung zur Zwangssteuerung des Einstellwinkels der Steuerklappe 5 vorgesehen sein, um durch Einstellen der Größe der Abtriebskraft A einen Neigungswinkel der Rotorlagerungsanordnung mit dem Lagerungskörper 2 um die horizontale Schwenkachse X einzustellen, insbesondere um die Drehzahl der Rotoranordnung 3 zu regulieren. Vorzugsweise kann das Verhältnis der Hebelarme des Lagerungskörpers bezüglich der Schwenkachse X, zwischen dem Steuerflügel-Tragabschnitt und dem Rotor-Tragabschnitt 2:1 betragen.

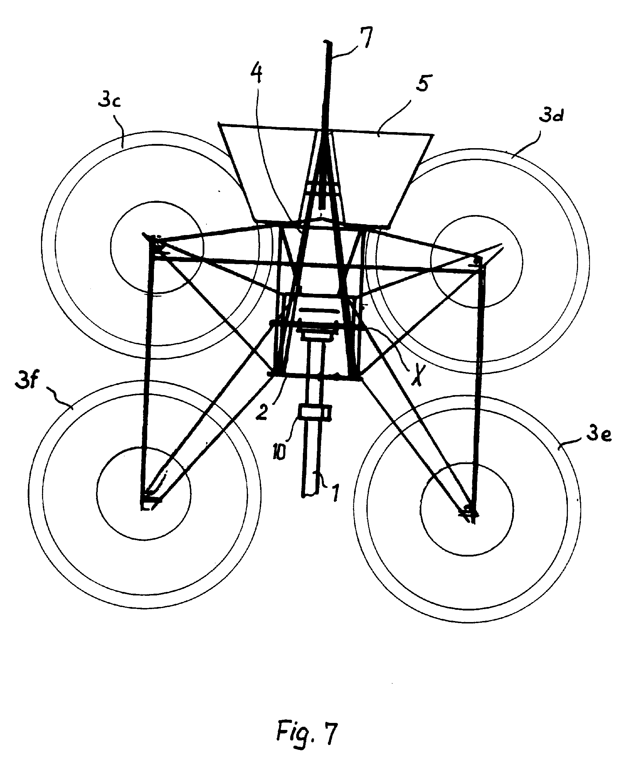

Zur Vergrößerung der Abtriebskraft und Stabilisierung der Bewegung des Rotorlagerungskörpers sind vorzugsweise beiderseits des Endabschnittes 4 des Lagerungskörpers Steuerflügel 5 vorgesehen, so daß diese paarweise schwenkbar am oberen Teil des Enaabschnittes 4 des Lagerungskörpers 2 ausgebildet sind (vgl. auch Fig. 7).

In Verbindung mit der Wahl des Einstellwinkels der Steuerflügel 5 an dem Endabschnitt 4 des Lagerungskörpers 2 ist vorzugsweise eine hier nicht gezeigte Sensor-Lageerfassungseinrichtung vorgesehen.

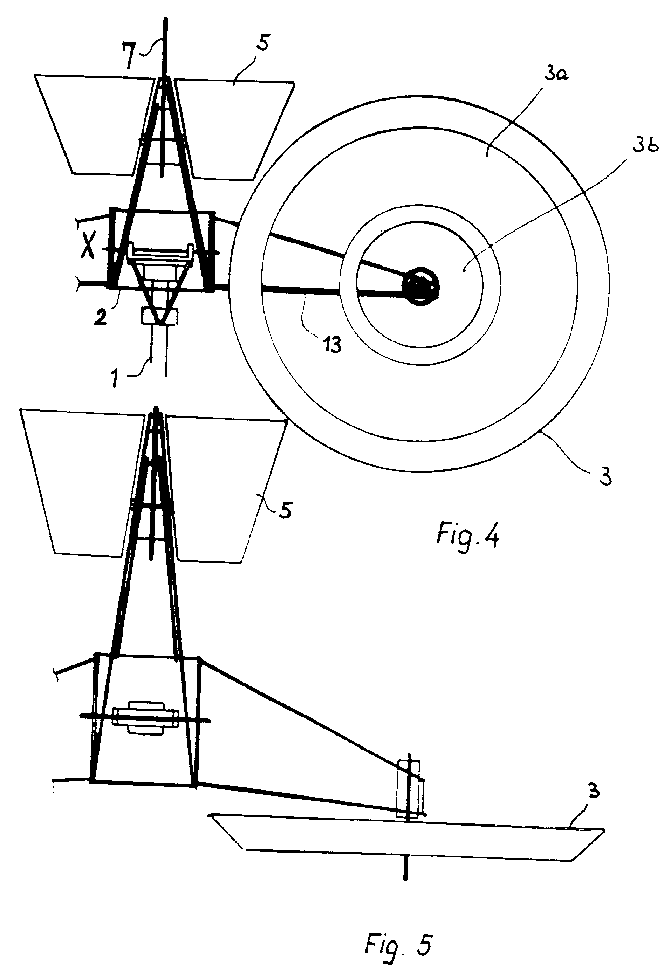

In den Fig. 4 und 5 ist ein weiteres Ausführungsbeispiel der vorliegenden Erfindung gezeigt, wobei die Rotoranordnung, bestehend aus zwei, von jeweils zwei koaxialen, gegenläufigen Rotoren 3a und 3b gebildeten Rotorpaaren 3, von denen in den Fig. 4 und 5 nur ein Rotorpaar gezeigt ist, seitlich an dem Lagerungskörper 2 über ein Stabwerk 13 befestigt ist.

Eine solche Anordnung führt in vorteilhafter Weise zu einer ungehinderten Anströmung des Steuerflügels 5, der nicht im Windschatten der Rotoranordnung 3 liegt, so daß ein entsprechend hoher Wirkungsgrad der Steuerflügelanordnung 5 unter Erzeugung eines entsprechenden Kompensations-Drehmomentes infolge der steuerflügelbedingten Abtriebskraft A erreicht wird.

In den Fig. 6 und 7 ist ein weiteres Ausführungsbeispiel der vorliegenden Erfindung dargestellt, wobei an einem Stabwerk 13, das Bestandteil des Lagerungskörpers 2 ist, zur Vergrößerung des Wirkungsgrades der Windkraftmaschine an der Rotoranordnung 3 vier Rotoren 3c bis 3f mit gegenläufigem Drall angeordnet sind, wobei es auch möglich ist, daß jeder Rotor 3c bis 3f seinerseits aus zwei gegenläufigen koaxial drehbar gelagerten Rotoren besteht. Auch hierbei ist eine hängende Lagerng der gesamten Rotorlagerungsanordnung mit dem Lagerungskörper 2 und der abströmseitig vorgesehenen Steuerflügelanordnung, bestehend aus einem Paar Steuerflügel 5 vorgesehen, derart, daß eine Horizontal-Mittelachse N der Rotoranordnung 3 sich unterhalb und im wesentlichen rechtwinklig zur horizontalen Schwenkachse X, durch die zugleich die Schwerpunktsachse der Rotorlagerungsanordnung verläuft, erstreckt. Eine Steuerfahne 7 unterstützt die beständige Windausrichtung der Rotoranordnung durch Unterstützung der Verschwenkung des Lagerungskörpers 2 um die vertikale Hochachse 9 in Anpassung an Änderungen der Windrichtung. In Fig. 6 ist der Turm 1 aus Vereinfachungsgründen nicht mit dargestellt und Fig. 7 zeigt die Rückansicht der Rotorlagerungsanordnung nach Fig. 6. Auch hierbei kann einerseits eine Schwenksteuerung um die horizontale Schwenkachse X einerseits durch eine mechanische Zwangssteuerung oder aber durch eine Steuerung des Einstellwinkels der Steuerklappen 5, z.B. zur Drehzahlbeeinflussung der Rotoren 3c bis 3f erfolgen.

In Verbindung mit Fig. 1 wird nunmehr anhand der Fig. 8 und 9 eine Hilfslagerungsanordnung erläutert, die dort vergrößert und als Einzelheit schematisch dargestellt ist und einerseits dazu dient, durch ein Vertikal-Hilfslager 10 das Hauptlager 8 für die Gierungslagerung der Rotorlagerungsanordnung um die vertikale Hochachse zu entlasten und zusätzlich seitliche Kippmomente aufzunehmen und die darüberhinaus eine Haupt- oder Hilfslagerung bzw. Stützlager für die die horizontale Schwenkachse X bildende Lagerung etabliert und eine zusätzliche Abstützung für den Lagerungskörper 2 bei der Verschwenkung um die horizontale Schwenkachse X bildet.

Wie schematisch bereits in Fig. 1 angedeutet, ist zusätzlich zu dem Hauptlager 8 für die Drehung der Lagerungsanordnung um die vertikale Hochachse 9 ein Vertikal-Hilfslager 10 unterhalb des Hauptlagers 8 vorgesehen, dessen Gehäuse 14 über ein zweiarmiges Stabwerk 15 mit dem übrigen Hauptteil des Lagerungskörpers 2 verbunden ist. In hier nicht näher gezeigter Weise stützen sich innerhalb des Vertikal-Hilfslagers 10 Zylinderrollen entweder direkt an dem Turm 1 oder an einer Führungsbahn desselben ab. Auf diese Weise wird auch bezüglich seitlich auftretender Kippbelastungen eine Zweipunktlagerung, bestehend aus dem Hauptlager 8 und dem Vertikal-Hilfslager 10 geschaffen, verbunden durch einen Hebel, so daß eine größere Stabilität der Rotorlagerungsanordnung gegenüber im wesentlichen vertikal zur Längsachse des Lagerungskörpers 2 mit dem Endabschnitt 4 angreifenden Kippmomenten geschaffen wird.

Außerdem kann in vorteilhafter Weise mit dem Gehäuse 14 des Vertikal-Hilfslagers 10 eine Doppel-Führungsschienenanordnung, bestehend aus beiderseits des Turmes sich erstreckenden, kreisbogenförmigen Führungsschienen 11, verbunden sein, die mit einer Zylinderrollenanordnung 12 in Eingriff ist, welche sich über Vertikalstreben 15 und einen Lagerungsträger 15' an dem Hauptlagers abstützt. Der Krümmungsmittelpunkt der Führungsschienen 11 liegt auf der horizontalen Schwenkachse X. Auf diese Weise kann eine zuverlässig geführte Schwenkbewegung um die horizontale Schwenkachse X erreicht werden. Zugleich können in diesen Bereich oder im Bereich des Turmes 1 Pufferungs- oder Anschlagmittel vorgesehen sein, die eine Schwenkbewegung des Lagerungskörpers 2 mit der Rotoranordnung 3 um die horizontale Schwenkachse X begrenzen.Zugleich wird auch hierdurch die Stabilität der Lagerungsanordnung gegenüber seitlichen Kippmomenten erhöht, ohne daß auf den Turm zusätzliche Biegebelastungen einwirken. Vorzugsweise sind die paarweise angeordneten Führungsrollen 12 an mit dem Gehäuse 14 des Vertikal-Hilfslagers gelagerten Querachsen 17 aufgenommen.

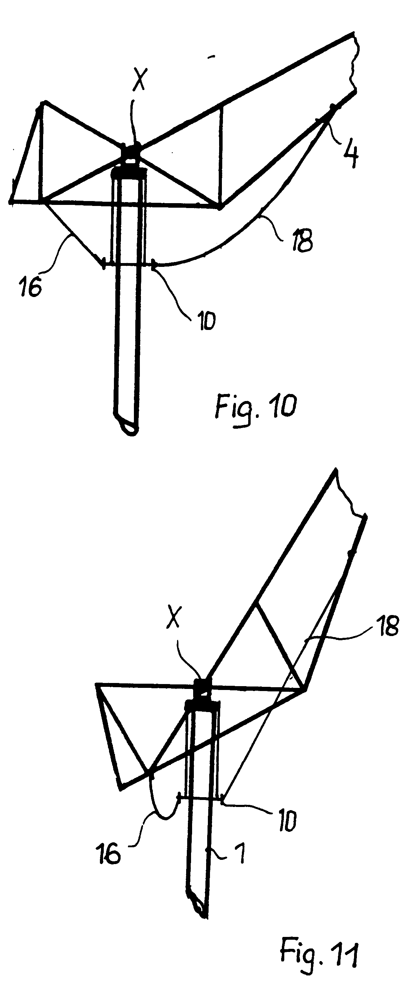

Eine weitere Ausgestaltung des Erfindungsgegenstandes ist schematisch anhand der Fig. 10 und 11 verdeutlicht, die im wesentlichen den Fig. 2 und 3 entsprechen, wobei der Lagerungskörper 2 mit dem Vertikal-Hilfslager 10 und dem verlängerten Endabschnitt 4 lediglich schematisch und unter Weglassung der Rotoranordnung und Steuerflügelanordnung gezeigt ist. Zur Begrenzung der Schwenkbewegung des Lagerungskörpers 2 um die horizontale Schwenkachse X ist für jeden der Hebelarme des Lagerungskörpers 2 ein Zugmittel, bestehend aus flexiblen Kabeln bzw. Kunststoffseilen 16,18 vorgesehen. Hierbei erstreckt sich eine Kunststoffseilanordnung 16 einerseits zwischen dem Gehäuse des Vertikal-Hilfslagers 10 und andererseits einem rotornahen Anlenkpunkt des Lagerungskörpers 2 und eine zweite Kunststoffseilanordnung 18 erstreckt sich in Verbindung mit dem anderen Hebelarm des Lagerungskörpers 2 zwischen dem Gehäuse des Vertikal-Hilfslagers 10 und einem Anlenkpunkt an dem Endabschnitt 4 des Lagerungskörpers 2, wobei dieser Anlenkpunkt etwa in der horizontalen Verlängerung des oberen Endes eines zentralen Teiles des Lagerungskörpers 2 vorgesehen ist. Die effektive Seillänge der flexiblen ersten Kunststoffseilanordnung 16 ist dabei vorzugsweise so gewählt, daß, wie in Fig. 10 dargestellt, eine Horizontallage des Lagerungskörpers 2 eine Endlage der Rotorlagerungsanordnung bildet, während die effektive Seillänge der zweiten Kunststoffseilanordnung 18 einen maximalen Neigungs- oder Verschwenkungswinkel um die horizontale Schwenkachse X bestimmt.

Obwohl dies hier nicht gezeigt ist, wird bevorzugt, daß die Lagerung der Enden der Kunststoffseilanordnungen 16, 18 an dem Gehäuse 14 des Vertikal-Hilfslagers 10 jeweils über drehbare Haspeln erfolgt, so daß durch eine Ansteuerung von diesen Haspeln zugeordnete Servomotoren, die ebenfalls an dem Gehäuse 14 festgelegt sind, eine entsprechende Zwangssteuerung und Verschwenkung des Lagerungskörpers um die horizontale Schwenkachse X, vorzugsweise ferngesteuert, erfolgen kann. Hierdurch kann z.B. auch in vorteilhafter Weise eine Vorbereitung der Anlage für Wartungsarbeiten erfolgen oder das Auftreten gefährlicher Windstärken durch entsprechende Neigung des Lagerungskörpers berücksichtigt werden.

Zusammenfassend zeichnet sich die Erfindung insbesondere dadurch aus, daß sie zu einer beträchtlichen Verringerung der Biegebeanspruchungen des Turmes der Windkraftmaschine und damit zu einer Verringerung der Fundamentsbelastung führt, da zu einem windkraftbedingten Biegemoment ein Kompensations-Biegemoment in Gegenrichtung durch eine am Schwanzende des Lagerungskörpers angeordnete Steuerflügeleinrichtung erzeugt wird, deren Profil eine entsprechende Abwärtskraft erzeugt. Uberdies führt die Hängelagerung des Lagerungskörpers der Rotoranordnung an dem Turm zu einer stabilen Gleichgewichtslagerung, wobei die Gewichtskräfte in einer normalen Arbeitslage der Rotoranordnung im wesentlichen durch den Turm selbst aufgenommen werden. Aufgrund der verringerten Beanspruchung kann überdies die vertikale Stützeinrichtung bzw. der Turm der Windkraftmaschine auch selbst leichter und weniger massereich ausgeführt werden. Hierdurch können beträchtliche Einsparungen bei den Kosten für derartige Windkraftmaschinen erreicht werden.Zusleich ermöglicht die Steuerung der Drehzahl der Rotoranordnung einerseits durch die Möglichkeit der Beeinflussung des Einstellwinkels der Steuerflügel 5 als auch durch die Möglichkeit, den Lagerungskörper 2 der Rotoranordnung 3 willkürlich um die horizontale Schwenk- und Lagerungsachse zu neigen, zu einem äußerst günstigen Regelungssystem für die Drehzahlregelung der Rotoren. Zugleich ist es durch die erfindungsgemäße Rotorlagerungseinrichtung möglich, mit Hilfe von Steuerfahnen oder Flügeln am hinteren Ende des Lagerungskörpers eine zuverlässige Einstellung der Rotoranordnung in den Wind zu erreichen, so daß ein maximaler Wirkungsgrad der Anlage gesichert wird.

Im Rahmen der obigen Erläuterungen wurde auf die selbstverständlich vorhandenen elektrischen Generatoreinrichtungen zur Umwandlung der Windenergie, die durch die Rotoranordnung 3 aufgenommen wird, in elektrische Energie, nicht näher Bezug genommen. Für den Fachmann ist selbstverständlich deutlich, daß diese Einrichtungen zur elektrischen Energieerzeugung in herkömmlicher Weise im Rahmen der Rotoranordnung 3 vorgesehen sind und z.B. auch zur Steuerung des Einstellwinkels des Steuerflügels, sofern dies gewünscht wird, oder für die Energieversorgung der Servomotoren, die in Verbindung mit Aufwickelhaspeln der Kunststoffseilanordnungen 19 vorgesehen sind, verwendet werden. Die Abmessungen der Rotorlagerungsanordnung, insbesondere die Wahl der Hebelverhältnisse sowie die Bemessung der Steuerflügel zur Erzeugung entsprechender Abwärtskräfte zur Biegemomententlastung des Turmes 1 sind in weitem Rahmen entsprechend den jeweiligen Bedürfnissen wählbar.

## Patentansprüche

1. Rotorlagerungsanordnung für eine Windkraftmaschine mit einer Rotoranordnung, mit zumindest einem Paar gegenläufiger Rotoren an einem mehrachsig bewegbaren Lagerungskörper, der eine Positionierungsvorrichtung aufweist und an zumindest einer stationären Stützeinrichtung gelagert ist, wobei die Rotoranordnung einerseits einer horizontalen Schwenkachse angeordnet ist, **dadurch gekennzeichnet**, daß der Lagerungskörper (2) oberhalb seines Schwerpunktes an der Stützeinrichtung (1) um die horizontale Schwenkachse (X) schwenkbar gelagert ist, die horizontale Schwenkachse (X) sich oberhalb einer Horizontal-Mittelachse (N) der Rotoranordnung (3) erstreckt und der Lagerungskörper (2) andererseits der horizontalen Schwenkachse (X) einen verlängerten Endabschnitt (4) mit zumindest einem aerodynamischen Steuerflügel (5) aufweist, der schwenkbar an dem Endabschnitt (4) gelagert und zur Erzeugung einer Abwärtskraft gestaltet ist.

2. Rotorlagerungsanordnung nach Anspruch 1, **dadurch gekennzeichnet**, daß der Lagerungskörper (2) einen Rotor-Tragabschnitt einerseits der horizontalen Schwenkachse (X) und einen Steuerflügel-Tragabschnitt andererseits der Schwenkachse (X) aufweist, wobei der Abstand zwischen der Lagerung der Rotoranordnung (3) und der Schwenkachse (X) kleiner ist als ein Abstand zwischen der Lagerung des Steuerflügels (5) und der Schwenkachse (X), vorzugsweise die Hälfte dieses Abstandes beträgt.

3. Rotorlagerungsanordnung nach einem der Ansprüche 1 oder 2, **dadurch gekennzeichnet**, daß der Steuerflügel (5) ein aerodynamisches Tragflügelprofil aufweist.

4. Rotorlagerungsanordnung nach Anspruch 3, **dadurch** **gekennzeichnet**, daß eine Krümmung einer Unterseite (5a) des Tragflügelprofiles des Steuerflügels (5) größer ist als eine Krümmung an einer Oberseite (5b) desselben.

5. Rotorlagerungsanordnung nach zumindest einem der vorhergehenden Ansprüche 1 bis 4, **dadurch** **gekennzeichnet**, daß ein Paar Steuerflügel (5) am oberen Ende des Endabschnittes (4) vorgesehen sind.

6. Rotorlagerungsanordnung nach zumindest einem der vorhergehenden Ansprüche 1 bis 5, **dadurch** **gekennzeichnet**, daß der Endabschnitt (4) zumindest eine Steuerklappe oder -flügel (7), oder eine Steuerfläche aufweist.

7. Rotorlagerungsanordnung nach zumindest einem der vorhergehenden Ansprüche 1 bis 6, **dadurch** **gekennzeichnet**, daß in Bezug auf eine Horizontalstellung des Lagerungskörpers (2) der verlängerte Endabschnitt (4) desselben einen sich geneigt aufwärts erstreckenden Steuerflügel-Tragabschnitt bildet, wobei eine Schwenklagerung des Steuerflügels (5) an dem Endabschnitt (4) etwa in einer gedachten axialen Verlängerung der Rotorperipherie vorgesehen ist.

8. Rotorlagerungsanordnung nach zumindest einem der vorhergehenden Ansprüche 1 bis 7, **dadurch** **gekennzeichnet**, daß der Lagerungskörper (2) durch eine Steuerungseinrichtung (5,7) zumindest um die horizontale Schwenkachse (X) und eine vertikale Stützachse bzw. Hochachse (9) gesteuert verschwenkbar ist.

9. Rotorlagerungsanordnung nach zumindest einem der vorhergehenden Ansprüche 1 bis 8, **dadurch** **gekennzeichnet**, daß der aerodynamische Steuerflügel (5) durch eine Steuereinrichtung in Verbindung mit einer Sensor-Lageerfassungsvorrichtung in einem Anstellwinkel kontrolliert steuerbar ist.

10. Rotorlagerungsanordnung nach zumindest einem der vorhergehenden Ansprüche 1 bis 9, **dadurch** **gekennzeichnet**, daß mindestens ein Paar koaxialer, gegenläufiger Rotoren (3a,3b) an dem Lagerungskörper (2) angeordnet ist.

11. Rotorlagerungsanordnung nach zumindest einem der vorhergehenden Ansprüche 1 bis 9, **dadurch** **gekennzeichnet**, daß zwei gegenläufige Rotoren nebeneinander an dem Lagerungskörper (2) angeordnet sind.

12. Rotorlagerungsanordnung nach zumindest einem der vorhergehenden Ansprüche 1 bis 9, **dadurch** **gekennzeichnet,** daß vier gegenläufige Rotoren (3c-3f) über ein Stabwerk (13) an dem Lagerungskörper (2) angeordnet sind.

13. Rotorlagerungsanordnung nach zumindest einem der vorhergehenden Ansprüche 1 bis 12, **dadurch** **gekennzeichnet,** daß in Verbindung mit einer Drehlagerung des Lagerungskörpers (2) um eine vertikale Hochachse (9) an der stationären Stützeinrichtung (1) ein Vertikal-Hilfslager (10) zur Aufnahme von Kippmomenten des Lagerungskörpers (2) vorgesehen ist.

14. Rotorlagerungsanordnung nach Anspruch 13, **dadurch** **gekennzeichnet**, daß der Lagerungskörper (2) durch ein Hauptlager (8) um die vertikale Hochachse (9) drehbar an der vertikalen Stützeinrichtung (1) gelagert und das Vertikal-Hilfslager (10) unterhalb des Hauptlagers (8) und in Verbindung mit diesem ausgebildet ist.

15. Rotorlagerungsanordnung nach Anspruch 14, **dadurch** **gekennzeichnet**, daß das Vertikal-Hilfslager (10) eine Zylinderrollenanordnung und ein Gehäuse (14) aufweist, wobei die Zylinderrollenanordnung mit einer ortsfesten Führungsbahn der vertikalen Stützeinrichtung (1) in Eingriff ist.

16. Rotorlagerungsanordnung nach Anspruch 15, **dadurch gekennzeichnet**, daß das Gehäuse (14) des Vertikal-Hilfslagers (10) über ein, vorzugsweise zweiarmiges Stabwerk (15) mit dem Hauptlager (8), gegebenenfalls über einen Lagerungsträger (15) verbunden ist.

17. Rotorlagerungsanordnung nach Anspruch 15, **dadurch gekennzeichnet**, daß zwischen dem Lagerungskörper (2) und dem Gehäuse (14) des Vertikal-Hilfslagers (10) ein Stützlager, bestehend aus einer Führungsschienen/ Führungsrollen-Anordnung (12, 11) ausgebildet ist.

18. Rotorlagerungsanordnung nach Anspruch 17, **dadurch gekennzeichnet,** daß zwei parallele, kreisbogenförmige Führungsschienenabschnitte (11) an dem Lagerungskörper (2), die sich im Bereich des Gehäuses (14) des Vertikal-Hilfslagers (10) entlang des Rotor-Tragabschnittes und des Steuerflügel-Tragabschnittes beiderseits der vertikalen Stützeinrichtung (1) zentrisch zur horizontalen Schwenkachse (X) des Lagerungskörpers (2) erstrecken sowie beiderseits des Gehäuses (14) des Vertikal-Hilfslagers (10) Führungsrollen (12) zum Eingriff mit den Führungsschienenabschnitten (11) vorgesehen sind.

19. Rotorlagerungsanordnung nach Anspruch 18, **dadurch gekennzeichnet**, daß die Führungsrollen (12) an Querachsen (17) des Gehäuses (14) angeordnet sind.

20. Rotorlagerungsanordnung nach zumindest einem der vorhergehenden Ansprüche 1 bis 19, **dadurch** **gekennzeichnet**, daß der Lagerungskörper (2) beiderseits der horizontalen Schwenkachse (X) ein erstes und ein zweites Zugmittelgetriebe (16, 18) zur Begrenzung einer Schwenkbewegung des Lagerungskörpers (2) um die horizontale Schwenkachse (X) aufweist.

21. Rotorlagerungsanordnung nach Anspruch 20, **dadurch gekennzeichnet**, daß das erste Zugmittelgetriebe (16) zwischen dem Gehäuse (14) des Vertikal-Hilfslagers (10) und einem rotorseitig von der Schwenkachse (X) beabstandeten Anlenkpunkt am Rotor-Tragabschnitt des Lagerungskörpers (2) vorgesehen ist, und daß zweite Zugmittelgetriebe (18) zwischen dem Gehäuse (14) des Vertikal-Hilfslagers (10) und einem steuerflügelseitig von der Schwenkachse (X) beabstandeten Anlenkpunkt des Steuerflügel-Tragabschnittes bzw. Endabschnittes (4) des Lagerungskörpers (2) vorgesehen ist.

22. Rotorlagerungsanordnung nach Anspruch 21, **dadurch gekennzeichnet,** daß die Zugmittelgetriebe (16, 18) zugfeste Seile, vorzugsweise Kunststoffseile sind, die an dem Gehäuse (14) des Vertikal-Hilfslagers (10) durch motorisch betätigbare Haspeln aufgenommen sind, die ihrerseits mit gehäusefesten Servomotoren in Eingriff sind.

23. Rotorlagerungsanordnung nach zumindest einem der vorhergehenden Ansprüche 1 bis 22, **dadurch gekennzeichnet**, daß Dämpfungseinrichtungen an dem Gehäuse (14) und/oder den Führungsschienenabschnitten (11) zur dämpfenden Begrenzung der Schwenkbewegung des Lagerungskörpers (2) vorgesehen sind.

## Claims

1. A rotor bearing assembly for a wind power engine comprising a rotor assembly, at least one pair of contra-rotating rotors on a multiaxially movable bearing body which includes a positioning device and is mounted on at least one stationary support device, the rotor assembly being arranged at one side of a horizontal pivot axis, characterised in that the bearing body (2) is supported above its centre of gravity on the support device (1) to pivot about the horizontal pivot axis (X), the horizontal pivot axis (X) extends above a horizontal centre axis (N) of the rotor assembly (3), and at the other side of the horizontal pivot axis (X) the bearing body (2) comprises an extended end section (4) with at least one aerodynamic control wing (5) which is pivotably mounted on the end section (4) and designed for the production of a downward force.

2. A rotor bearing assembly according to claim 1, characterised in that the bearing body (2) includes a rotor support section at one side of the horizontal pivot axis (X) and a control-wing support section at the other side of the pivot axis (X), the distance between the bearing of the rotor assembly (3) and the pivot axis (X) being smaller than the distance between the bearing of the control wing (5) and the pivot axis (X), preferably half the distance.

3. A rotor bearing assembly according to claim 1 or 2, characterised in that the control wing (5) has an aerodynamic airfoil profile.

4. A rotor bearing assembly according to claim 3, characterised in that a curvature of a bottom side (5a) of the airfoil profile of the control wing (5) is greater than a curvature on a top side (5b) thereof.

5. A rotor bearing assembly according to at least one of the preceding claims 1 to 4, characterised in that a pair of control wings (5) are provided on the top end of the end section (4).

6. A rotor bearing assembly according to at least one of the preceding claims 1 to 5, characterised in that the end section (4) has at least one control flap or control wing (7) or a control surface.

7. A rotor bearing assembly according to at least one of the preceding claims 1 to 6, characterised in that with respect to a horizontal position of the bearing body (2) the extended end section (4) thereof forms a control-wing support section extending obliquely upwards, a pivot bearing of the control wing (5) being provided on the end section (4) approximately in an imaginary axial extension of the rotor periphery.

8. A rotor bearing assembly according to at least one of the preceding claims 1 to 7, characterised in that the bearing body (2) is adapted to be pivoted in a controlled way by a control device (5, 7) at least about the horizontal pivot axis (X) and a vertical support axis (9).

9. A rotor bearing assembly according to at least one of the preceding claims 1 to 8, characterised in that the aerodynamic control wing (5) is controllable in a controlled way by a control device together with a sensor-type position detecting device within an angle of inclination.

10. A rotor bearing assembly according to at least one of the preceding claims 1 to 9, characterised in that at least one pair of coaxial contra-rotating rotors (3a, 3b) are arranged on the bearing body (2).

11. A rotor bearing assembly according to at least one of the preceding claims 1 to 9, characterised in that two contra-rotating rotors are arranged side by side on the bearing body (2).

12. A rotor bearing assembly according to at least one of the preceding claims 1 to 9, characterised in that four contra-rotating rotors (3c - 3f) are arranged on the bearing body (2) via a frame structure (13).

13. A rotor bearing assembly according to at least one of the preceding claims 1 to 12, characterised in that a vertical auxiliary bearing (10) is provided for receiving tilting moments of the bearing body (2) in connection with a rotatable mounting of the bearing body (2) about a vertical axis (9) on the stationary support device (1).

14. A rotor bearing assembly according to claim 13, characterised in that the bearing body (2) is supported through a main bearing (8) on the vertical support device (1) for rotation about the vertical axis (9), and the vertical auxiliary bearing (10) is formed below the main bearing (8) and in communication therewith.

15. A rotor bearing assembly according to claim 14, characterised in that the vertical auxiliary bearing (10) comprises a cylindrical roller assembly and a housing (14), the cylindrical roller assembly being in engagement with a stationary guide path of the vertical support device (1).

16. A rotor bearing assembly according to claim 15, characterised in that the housing (14) of the vertical auxiliary bearing (10) is connected via a preferably two-armed frame structure (15) to the main bearing (8), optionally via a bearing carrier (15).

17. A rotor bearing assembly according to claim 15, characterised in that a support bearing consisting of a guide-rail/guide roller assembly (12, 11) is formed between the bearing body (2) and the housing (14) of the vertical auxiliary bearing (10).

18. A rotor bearing assembly according to claim 17, characterised in that two parallel guide rail sections (11) of circular arcuate shape are provided on the bearing body (2), the guide rail sections extending within the area of the housing (14) of the vertical auxiliary bearing (10) along the rotor support section and the control-wing support section at both sides of the vertical support device (1) centrically with respect to the horizontal pivot axis (X) of the bearing body (2), and guide rollers (12) are provided at both sides of the housing (14) of the vertical auxiliary bearing (10) for engagement with the guide rail sections (11).

19. A rotor bearing assembly according to claim 18, characterised in that the guide rollers (12) are arranged on transverse shafts (17) of the housing (14).

20. A rotor bearing assembly according to at least one of the preceding claims 1 to 19, characterised in that at both sides of the horizontal pivot axis (X) the bearing body (2) comprises first and second tension means (16, 18) for limiting a pivotal movement of the bearing body (2) about the horizontal pivot axis (X).

21. A rotor bearing assembly according to claim 20, characterised in that the first tension means (16) is provided between the housing (14) of the vertical auxiliary bearing (10) and a coupling point spaced apart from the pivot axis (X) at the rotor side on the rotor support section of the body bearing (2), and that second tension means (18) is provided between the housing (14) of the vertical auxiliary bearing (10) and a coupling point of the control-wing support section or end section (4) of the bearing body (2), which coupling point is spaced apart from the pivot axis (X) at the control wing side.

22. A rotor bearing assembly according to claim 21, characterised in that the tension means (16, 18) are tension-proof ropes, preferably plastic ropes which are received on the housing (14) of the vertical auxiliary bearing (10) by motor-operable reels which, in turn, are in engagement with servo motors secured to the housing.

23. A rotor bearing assembly according to at least one of the preceding claims 1 to 22, characterised in that damping means are provided on the housing (14) and/or the guide rail sections (11) for dampingly limiting the pivotal movement of the bearing body (2).

## Revendications

1. Agencement de suspension de rotor pour une éolienne comportant un agencement de rotors avec au moins une paire de rotors tournant en sens contraire sur un corps de suspension déplaçable suivant plusieurs axes, qui comporte un dispositif de positionnement et qui est monté sur au moins un dispositif d'appui fixe, l'agencement de rotors étant placé sur le côté d'un axe de pivotement horizontal, caractérisé en ce que le corps de suspension (2) est monté pivotant autour de l'axe de pivotement (X) horizontal, au-dessus de son centre de gravité sur le dispositif d'appui (1), l'axe de pivotement (X) horizontal s'étend au-dessus d'un axe médian horizontal (M) de l'agencement de rotors (3) et le corps de suspension (2) présente, de l'autre côté de l'axe de pivotement (X) horizontal, une partie terminale (4) prolongée avec au moins une pale de commande (5) aérodynamique qui est montée pivotante sur la partie terminale (4) et qui est conçue de manière à produire une force descendante.

2. Agencement de suspension de rotor selon la revendication 1, caractérisé en ce que le corps de suspension (2) comporte une partie de support de rotor d'un côté de l'axe de pivotement (X) horizontal et une partie de support de pale de commande de l'autre côté de l'axe de pivotement (X), la distance entre la suspension de l'agencement de rotors (3) et l'axe de pivotement (X) étant inférieure à la distance entre la suspension de la pale de commande (5) et l'axe de pivotement (X), de préférence égale à la moitié de cette distance.

3. Agencement de suspension de rotor selon l'une des revendications 1 ou 2, caractérisé en ce que la pale de commande (5) comporte un profil d'aile portante aérodynamique.

4. Agencement de suspension de rotor selon la revendication 3, caractérisé en ce qu'une courbure d'une face inférieure (5a) du profil d'aile portante de la pale de commande (5) est supérieure à une courbure d'une face supérieure (5b) de celui-ci.

5. Agencement de suspension de rotor selon l'une au moins des revendications 1 à 4 précédentes, caractérisé en ce qu'une paire de pales de commande (5) est prévue à l'extrémité supérieure de la partie terminale (4).

6. Agencement de suspension de rotor selon l'une au moins des revendications 1 à 5 précédentes, caractérisé en ce que la partie terminale (4) comporte au moins un volet de commande ou pale de commande (7), ou une surface de commande.

7. Agencement de suspension de rotor selon l'une au moins des revendications 1 à 6 précédentes, caractérisé en ce que par rapport à une position horizontale du corps de suspension (2), sa partie terminale (4) forme une partie de support de pale de commande, s'étendant vers le haut, une position pivotée de la pale de commande (5) sur la partie terminale (4) étant prévue à peu prés dans un prolongement axial imaginaire de la périphérie du rotor.

8. Agencement de suspension de rotor selon l'une au moins des revendications 1 à 7 précédentes, caractérisé en ce que le corps de suspension (2) peut pivoter de manière commandée par un dispositif de commande (5, 7) au moins autour de l'axe de pivotement horizontal (X) et un axe d'appui vertical ou axe vertical (9).

9. Agencement de suspension de rotor selon l'une au moins les revendications 1 à 8 précédentes, caractérisé en ce que la pale de commande (5) aérodynamique peut-être commandée de manière contrôlée sous un angle d'inclinaison, par un dispositif de commande en liaison avec un dispositif de détection de position à capteur.

10. Agencement de suspension de rotor selon l'une au moins des revendications 1 à 9 précédentes, caractérisé en ce qu'au moins une paire de rotors (3a, 3b) coaxiaux, tournant en sens contraire, est montée sur le corps de suspension (2).

11. Agencement de suspension de rotor selon l'une au moins des revendications 1 à 9 précédentes, caractérisé en ce que deux rotors tournant en sens contraire sont juxtaposés sur le corps de suspension (2).

12. Agencement de suspension de rotor selon l'une au moins des revendications 1 à 9 précédentes, caractérisé en ce que quatre rotors (3c à 3f) tournant en sens contraire sont montés sur le corps de suspension (2), par l'intermédiaire d'une barre (13).

13. Agencement de suspension de rotor selon l'une au moins des revendications 1 à 12 précédentes, caractérisé en ce qu'en liaison avec une suspension en rotation du corps de suspension (2) autour d'un axe vertical (9) sur le dispositif d'appui (1) fixe, il est prévu un palier auxiliaire vertical (10) destiné à absorber les couples de renversement du corps de suspension (2).

14. Agencement de suspension de rotor selon la revendication 13, caractérisé en ce que le corps de suspension (2) est monté tournant, par un palier principal (8), autour de l'axe vertical (9), sur le dispositif d'appui (1) vertical et le palier auxiliaire vertical (10) est réalisé au-dessous du palier principal (8) et en liaison avec celui-ci.

15. Agencement de suspension de rotor selon la revendication 14, caractérisé en ce que le palier auxiliaire vertical (10) comporte un ensemble de rouleaux cylindriques et un boîtier (14), l'ensemble de rouleaux cylindriques étant en prise avec une voie de guidage fixe du dispositif d'appui (1) vertical.

16. Agencement de suspension de rotor selon la revendication 15, caractérisé en ce que le boîtier (14) du palier auxiliaire vertical (10) est relié par une barre (15), de préférence à deux bras, avec le palier principal (8), le cas échéant par une poutre de suspension (15).

17. Agencement de suspension de rotor selon la revendication 15, caractérisé en ce qu'un palier d'appui, constitué d'un agencement de rails de guidage/rouleaux de guidage (12, 11), est prévu entre le corps de suspension (2) et le boîtier (14) du palier auxiliaire vertical (10).

18. Agencement de suspension de rotor selon la revendication 17, caractérisé en ce qu'il est prévu deux parties de rail de guidage (11) en arc de cercle, parallèles, sur le corps de suspension (2), qui s'étendent dans la zone du boîtier (14) du palier auxiliaire vertical (10), le long de la partie de support du rotor et de la partie de support de la pale de commande, des deux côtés du dispositif d'appui (1) vertical, de manière centrée par rapport à l'axe de pivotement (X) horizontal du corps de suspension (2) ainsi que des deux côtés du boîtier (14) du palier auxiliaire vertical (10), des rouleaux de guidage (12) venant en prise avec les parties de rail de guidage (11).

19. Agencement de suspension de rotor selon la revendication 18, caractérisé en ce que les rouleaux de guidage (12) sont placés sur des axes transversaux (17) du boîtier (14).

20. Agencement de suspension de rotor selon l'une au moins des revendications 1 à 19 précédentes, caractérisé en ce que le corps de suspension (2) comporte des deux côtés de l'axe de pivotement (X) horizontal, une première et une seconde transmissions à moyens de traction (16, 18), pour limiter un pivotement du corps de suspension (2) autour de l'axe de pivotement (X) horizontal.

21. Agencement de suspension de rotor selon la revendication 20, caractérisé en ce que la première transmission à moyens de traction (16) est prévue entre le boîtier (14) du palier auxiliaire vertical (10) et un point d'articulation, espacé côté rotor de l'axe de pivotement (X), sur la partie de support de rotor du corps de suspension (2), et en ce que la seconde transmission à moyens de traction (18) est prévue entre le boîtier (14) du palier auxiliaire vertical (10) et un point d'articulation, espacé côté pale de commande de l'axe de pivotement (X), de la partie de support de la pale de commande ou de la partie terminale (4) du corps de suspension (2).

22. Agencement de suspension de rotor selon la revendication 21, caractérisé en ce que les transmissions à moyens de traction (16, 18) sont des câbles résistant à la traction, de préférence des câbles en matière plastique, qui sur le boîtier (14) du palier auxiliaire vertical (10) sont repris par des treuils motorisés qui de leur côté sont en prise avec des servomoteurs solidaires du boîtier.

23. Agencement de suspension de rotor selon l'une au moins des revendications 1 à 22 précédentes, caractérisé en ce que des dispositifs d'amortissement sont prévus sur le boîtier (14) et/ou les parties de rail de guidage (11), pour limiter de manière amortie le pivotement du corps de suspension (2).
